# EUROPEAN PATENT SPECIFICATION

(11) **EP 2 834 870 B1**
(45) Date of publication and mention of the grant of the patent: **16.09.2015**
(21) Application number: 13722120.6
(22) Date of filing: 04.04.2013
(51) Int. Cl.: H01M 8/02, H01M 8/10, H01M 8/24

(54) **MEMBRANE ELECTRODE ASSEMBLY, FUEL CELL, FUEL CELL STACK, AND METHOD FOR MANUFACTURING MEMBRANE ELECTRODE ASSEMBLY**
MEMBRANELEKTRODENANORDNUNG, BRENNSTOFFZELLE, BRENNSTOFFZELLENSTAPEL UND VERFAHREN ZUR HERSTELLUNG EINER MEMBRANELEKTRODENANORDNUNG
ENSEMBLE MEMBRANE-ÉLECTRODE, PILE À COMBUSTIBLE, EMPILEMENT DE PILE À COMBUSTIBLE ET PROCÉDÉ DE FABRICATION D'UN ENSEMBLE MEMBRANE-ÉLECTRODE

(30) Priority: 04.04.2012 JP 2012085610; 06.04.2012 JP 2012087456
(43) Date of publication of application: 11.02.2015
(73) Proprietor: Nissan Motor Co., Ltd, Yokohama-shi, Kanagawa 221-0023 (JP)
(72) Inventor: SHIOMI, Takeshi, Atsugi-shi Kanagawa 243-0123 (JP); AOKI, Osamu, Atsugi-shi Kanagawa 243-0123 (JP); IRITSUKI, Keita, Atsugi-shi Kanagawa 243-0123 (JP); SATOU, Kazuyuki, Atsugi-shi Kanagawa 243-0123 (JP)
(74) Representative: Hoefer & Partner Patentanwälte mbB
(86) International application number: PCT/JP2013/002348
(87) International publication number: WO 2013/150800

(56) References cited:
- EP-A1- 1 633 010
- WO-A1-2008/138396
- WO-A1-2010/047143
- WO-A2-2007/060527
- JP-A- 2010 027 243
- JP-A- 2010 033 938

## Description

### Technical Field

The present invention relates to a membrane electrode assembly used for example in a solid polymer electrolyte fuel cell, a fuel cell, a fuel cell stack, and a method for manufacturing a membrane electrode assembly.

### Background Art

As a conventional technique concerning a fuel cell, there is a configuration disclosed in PTL 1. In a fuel cell described in PTL 1, a gas-permeable electrode region MPL is formed with coarse regions formed of conductive particles of a large particle size and dense regions formed of conductive particles of a particle size smaller than those of the coarse regions. The gas-permeable electrode region MPL is in contact with a gas diffusion layer at an upper surface thereof and with a catalyst layer at a lower surface thereof.

The particles used in the dense regions have such a particle size as to make a saturated water vapor pressure in voids, which is determined according to the Kelvin equation, be higher than that in an open space. Thereby, in the fuel cell, the saturated water vapor pressure in the coarse regions is made lower than that in the dense regions so that condensation of water vapor produced at the catalyst layer is suppressed in the dense regions. PTL 2 discloses a membrane electrode assembly in which a low-rigidity buffer layer is stacked on a surface of a catalyst layer and a rigid high expanded metal layer is stacked on said low-rigidity buffer layer. PTL 2 further discloses a method for manufacturing the membrane electrode assembly comprising compressing the component layers.

### Citation List

### Patent Literature

PTL 1: Japanese Patent Application Laid-Open Publication No.2009-245871 PTL 2: JP 2010 027243 A

### Summary of Invention

In the fuel cell described in PTL 1, the porosity in the dense regions determined according to the Kelvin equation is in nano-order, and if liquid water is condensed in the coarse regions, gas diffusivity drastically decreases.

In view of the above problem, the present invention has an objective of providing a membrane electrode assembly, a fuel cell, and a method for manufacturing a membrane electrode assembly, which can facilitate discharge of liquid water produced upon power generation and improve oxygen transport and consequently the power generation performance.

A membrane electrode assembly according to a first aspect of the present invention is a membrane electrode assembly in which a first porous body is stacked on a surface of a catalyst layer and a second porous body is stacked on the first porous body, wherein the first porous body and the second porous body define a gas diffusion layer, the first porous body has a lower porosity at portions in contact with solid-phase portions of the second porous body than at portions facing gas-phase portions of the second porous body, and the second porous body is a metal porous body and is distinct from the first porous body.

A fuel cell according to a second aspect of the present invention comprises: a membrane electrode assembly having a structure in which an electrolyte membrane is sandwiched by paired electrode layers; and a separator configured to form a gas flow channel between the separator and the aforementioned membrane electrode assembly. Each of the electrode layers includes a first porous body and a second porous body which is formed of a metal porous body and which forms an electrode surface, and the first porous body and the second porous body engage with each other such that the first porous body partly digs into voids in the second porous body.

### Brief Description of Drawings

[fig.1]Fig. 1 is a perspective view showing the outer appearance of a fuel cell stack 10 according to a first embodiment.
[fig.2]Fig. 2 is a dismantled perspective view showing main components of the fuel cell stack 10 shown in Fig. 1.
[fig.3]Fig. 3 is a plan view of a cell unit A1 shown in Fig. 2.
[fig.4]Fig. 4 is a sectional view of the cell unit A1 taken along line I-I in Fig. 3.
[fig.5]Fig. 5(A) is an enlarged plan view of a surface of an air electrode 32 shown in Fig. 4, and Fig. 5(B) is an enlarged sectional view showing an electrolyte membrane 31, the air electrode 32, and a fuel electrode 33 shown in Fig. 4.
[fig.6]Fig. 6 is an explanatory diagram schematically illustrating the structure of the air electrode 32 shown in Fig. 4.
[fig.7]Fig. 7 is a diagram illustrating the degree of bend in a space inside a porous body (a second porous body). Specifically, Fig. 7(A) is a schematic diagram showing a shortest transport distance L1 in a free space, and Fig. 7(B) is a schematic diagram showing a shortest transport distance L2 in a space inside a porous body (the second porous body).
[fig.8]Fig. 8 shows a first embodiment of a method for manufacturing a membrane electrode assembly 30. Specifically, Fig. 8(A) shows a first porous body 32b before being compressed by a second porous body 32a, and Fig. 8(B) shows the first porous body 32b after being compressed by the second porous body 32a.
[fig.9]Fig. 9 shows a second example of the method for manufacturing the membrane electrode assembly 30. Specifically, Fig. 9(A) shows the first porous body 32b before being compressed by the second porous body 32a, and Fig. 9(B) shows the first porous body 32b after being compressed by the second porous body 32a.
[fig.10]Fig. 10 is an explanatory diagram schematically illustrating the structure of the air electrode 32 according to a second embodiment.
[fig.11]Fig. 11 is an explanatory diagram specifically illustrating the structure of the air electrode shown in Fig. 10.
[fig.12]Fig. 12 is an explanatory diagram schematically illustrating the structure of the air electrode 32 according to another embodiment.
[fig.13]Fig. 13 is an explanatory diagram schematically illustrating the structure of the air electrode 32 according to yet another embodiment. Specifically, Fig. 13(A) shows the first porous body 32b before being compressed by the second porous body 32a, and
Fig. 13(B) shows the first porous body 32b after being compressed by the second porous body 32a.

### Description of Embodiments

Embodiments of the present invention are described below with reference to the drawings.

### First Embodiment

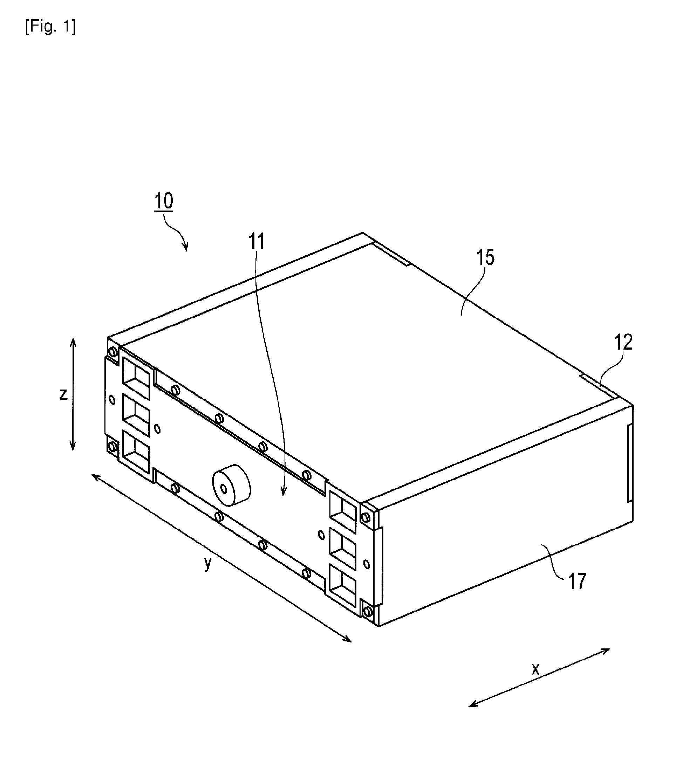

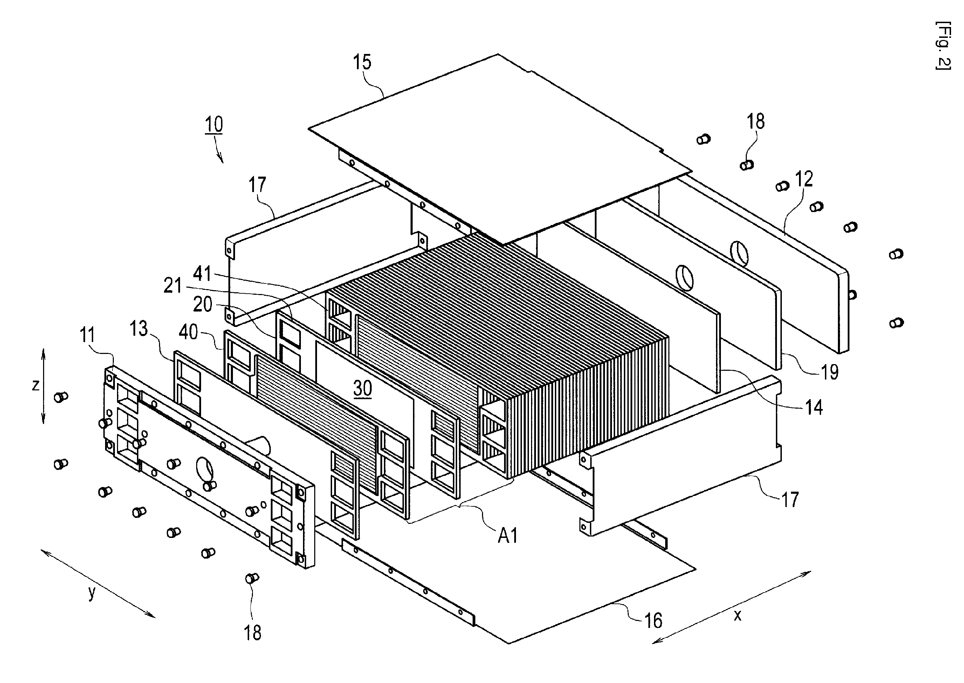

With reference to Figs. 1 and 2, a description is given of the overall configuration of a fuel cell stack 10 according to a first embodiment. The fuel cell stack 10 is a solid polymer electrolyte fuel cell stack installed for example in a vehicle.

The fuel cell stack 10 has paired end plates 11 and 12, paired power collection plates 13 and 14 placed between the paired end plates 11 and 12, and multiple cell units (fuel cells) A1 placed between the paired power collection plates 13 and 14. The end plate 12 is provided at one end of the cell units A1 in their stacking direction (an X direction) (at the right end in Figs. 1 and 2) with the power collection plate 14 and a spacer 19 interposed therebetween. Also, the end plate 11 is provided at the other end of the cell units A1 in the X direction (at the left end in Figs. 1 and 2) with the power collection plate 13 interposed therebetween. The end plates 11 and 12 sandwich the paired power collection plates 13 and 14 and the stacked cell units A1. The fuel cell stack 10 further includes fastening plates 15 and 16 and reinforcement plates 17 and 17 to fasten the sandwiched power collection plates 13 and 14 and cell units A1. The fastening plates 15 and 16 are provided, respectively, on front and rear surfaces of the cell units A1 on their long sides (the upper and lower surfaces in Figs. 1 and 2), and the reinforcement plates 17 and 17 are provided, respectively, on front and rear surfaces of the cell units A1 on their short sides. The fastening plates 15 and 16 and the reinforcement plates 17 and 17 are connected to the end plates 11 and 12 with bolts 18. In this way, a stack of the cell units A1 is made into a structure with an integral case as shown in Fig. 1, and the stack of the cell units A1 are tied and pressed in the X direction such that each cell unit A1 receives a predetermined contact surface pressure. Favorable gas sealing and conductivity are thus maintained.

As shown in Fig. 2, each cell unit A1 has a cell frame 20 for fuel cell and paired separators 40 and 41 in contact with front and rear surfaces of the cell frame 20 for fuel cell, respectively. Note that the cell frame for fuel cell is simply called a "cell frame" in the embodiments. The cell frame 20 has a horizontal rectangular shape in a front view seen in the stacking direction of the cell units A1 (the X direction), and has: a frame 21 made of a resin and having an almost constant plate thickness; and a membrane electrode assembly 30 located in a center portion of the frame 21.

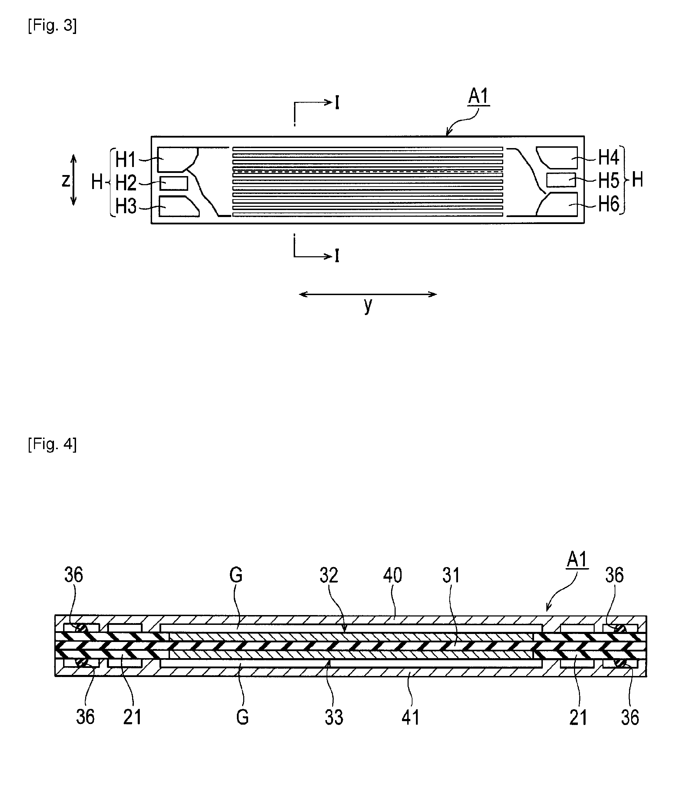

The plan structure of the cell unit A1 is described with reference to Fig. 3. Manifold portions H for supplying coolant water, a hydrogen-containing gas, and an oxygen-containing gas and manifold portions H for discharging them are formed at both side portions of the cell unit A1, respectively.

The manifold portions H at the one side include supply manifold holes H1 to H3. The supply manifold holes H1 to H3 are specifically a manifold hole for supplying oxygen-containing gas (H1), a manifold hole for supplying coolant fluid (H2), and a manifold hole for supplying hydrogen-containing gas (H3), and form flow channels for an oxygen-containing gas, a coolant fluid, and a hydrogen-containing gas, respectively, in the X direction shown in Figs. 1 and 2.

The manifold portions H at the other side include discharge manifold holes H4 to H6. The discharge manifold holes H4 to H6 are specifically a manifold hole for discharging hydrogen-containing gas (H4), a manifold hole for discharging coolant fluid (H5), and a manifold hole for discharging oxygen-containing gas (H6), and form flow channels for the hydrogen-containing gas, the coolant fluid, and the oxygen-containing gas, respectively, in the X direction shown in Figs. 1 and 2. Note that the supply manifold holes and the discharge manifold holes may be reversed in position partly or entirely.

The sectional structure of the cell unit A1 is described with reference to Fig. 4. Gas flow channels G through each of which a power generation gas (the hydrogen-containing gas or the oxygen-containing gas) flows are defined by the paired separators 40 and 41 in contact with both surfaces of the cell frame 20 (31 to 33 and 21), respectively.

The cell frame 20 (31 to 33 and 21) is also called a membrane electrode assembly (MEA), and includes a membrane electrode assembly 30 (31 to 33) and the frame 21 having a quadrangular shape in a plan view. The membrane electrode assembly 30 (31 to 33) has: an electrolyte membrane 31 made for example of a solid polymer; and an air electrode 32 and a fuel electrode 33 in contact with respective surfaces of the electrolyte membrane 31.

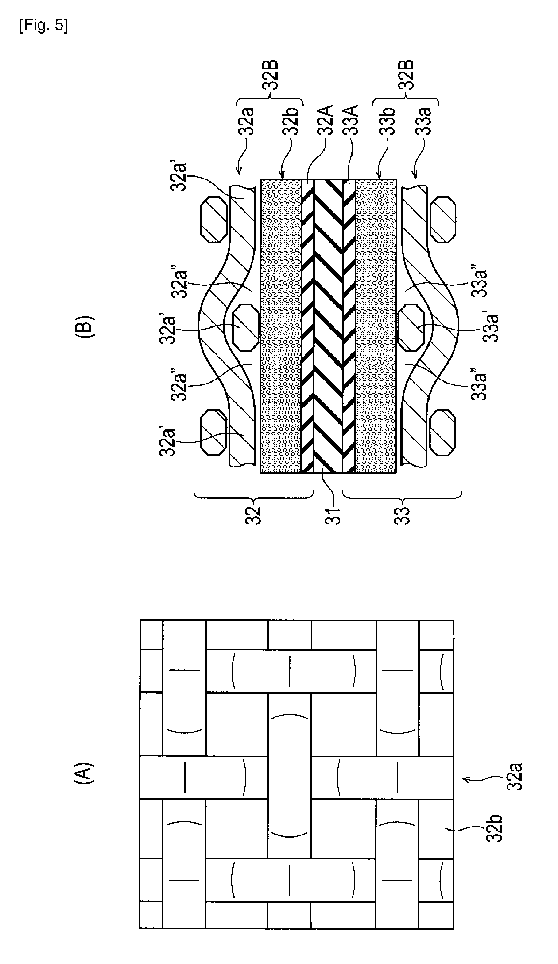

As shown in Fig. 3, the frame 21 has the supply manifold holes H1 to H3 along one of the short sides of the frame 21, and has the discharge manifold holes H4 to H6 along the other short side thereof. The air electrode 32 and the fuel electrode 33 will be further described later with reference to Fig. 5.

The separators 40 and 41 are each made for example of stainless steel, have a quadrangular shape that matches the frame 21 and the electrolyte membrane 31, and have the supply manifold holes H1 to H3 and the discharge manifold holes H4 to H6 like the frame 21. The separators 40 and 41 form the gas flow channels G by being superimposed on the cell frame 20 (31 to 33 and 21). In this state, the supply manifold holes H1 to H3 and the discharge manifold holes H4 to H6 of the separators 40 and 41 and of the frame 21 communicate with each other in the X direction.

A gas seal 36 is provided between an edge portion of the frame 21 and an edge portion of each of the separators 40 and 41, as well as around each of the supply manifold holes H1 to H3 and the discharge manifold holes H4 to H6. The gas seal 36 is also provided between every adjacent ones of the stacked cell units A1, i.e., between the adjacent separators 40 and 41. This enables the coolant liquid to flow between the adjacent separators 40 and 41. The gas seal 36 forms gas flow channels for the oxygen-containing gas, the hydrogen-containing gas, and the coolant fluid between the layers in an air-tight manner. The gas seal 36 provides an opening to an edge portion of appropriate ones of the supply holes H1 to H3 and the discharge holes H4 to H6 so that a fluid may flow between the layers.

With reference to Figs. 5(A) and 5(B), a description is given of the configurations of the air electrode 32 and the fuel electrode 33 shown in Fig. 4. Fig. 5(A) is a plan view showing a surface of the air electrode 32 in Fig. 4 in an enlarged manner, and Fig. 5(B) is a sectional view showing the membrane electrode assembly 30 (31 to 33) in Fig. 4 in an enlarged manner.

The air electrode 32 has a catalyst layer 32A in contact with one of the surfaces of the electrolyte membrane 31 and a gas diffusion layer 32B stacked on a surface of the catalyst layer 32A on the separator 40 side. The gas diffusion layer 32B has a first porous body 32b in contact with the catalyst layer 32A and a second porous body 32a stacked thereon on the separator 40 side.

The second porous body 32a is for example wire mesh formed by weaving metal wire materials (several tens micro meter) alternately, and has solid-phase portions 32a' where the metal wire material exists and gas-phase portions 32a" where no metal wire material exists. The first porous body 32b has a low porosity at portions in contact with the solid-phase portions 32a' of the second porous body 32a, and has a relatively high porosity at portions facing the gas-phase portions 32a" of the second porous body 32a. Specifically, the first porous body 32b has a lower porosity at the portions in contact with the solid-phase portions 32a' than at the portions facing the gas-phase portions 32a".

Further, the first porous body 32b has a large particle size at the portions in contact with the solid-phase portions 32a' of the second porous body 32a, and has a relatively small particle size at the portions facing the gas-phase portions 32a" of the second porous body 32a.

The fuel electrode 33 has the same structure as the air electrode 32 described above. To be more specific, the fuel electrode 33 has a catalyst layer 33A in contact with the other surface of the electrolyte membrane 31 and a gas diffusion layer 33B stacked on a surface of the catalyst layer 33A on the separator 41 side. The gas diffusion layer 33B has a first porous body 33b in contact with the catalyst layer 33A and a second porous body 33a stacked thereon on the separator 41 side. The second porous body 33a is for example wire mesh formed by weaving metal wire materials (several tens micro meter) alternately, and has solid-phase portions 33a' where the metal wire material exists and gas-phase portions 33a" where no metal wire material exists. The first porous body 33b has a low porosity at the portions in contact with the solid-phase portions 33a' of the second porous body 33a, and has a relatively high porosity at the portions facing the gas-phase portions 33a" of the second porous body 33a.

Further, the first porous body 33b has a large particle size at the portions in contact with the solid-phase portions 33a' of the second porous body 33a, and has a relatively small particle size at the portions facing the gas-phase portions 33a" of the second porous body 33a.

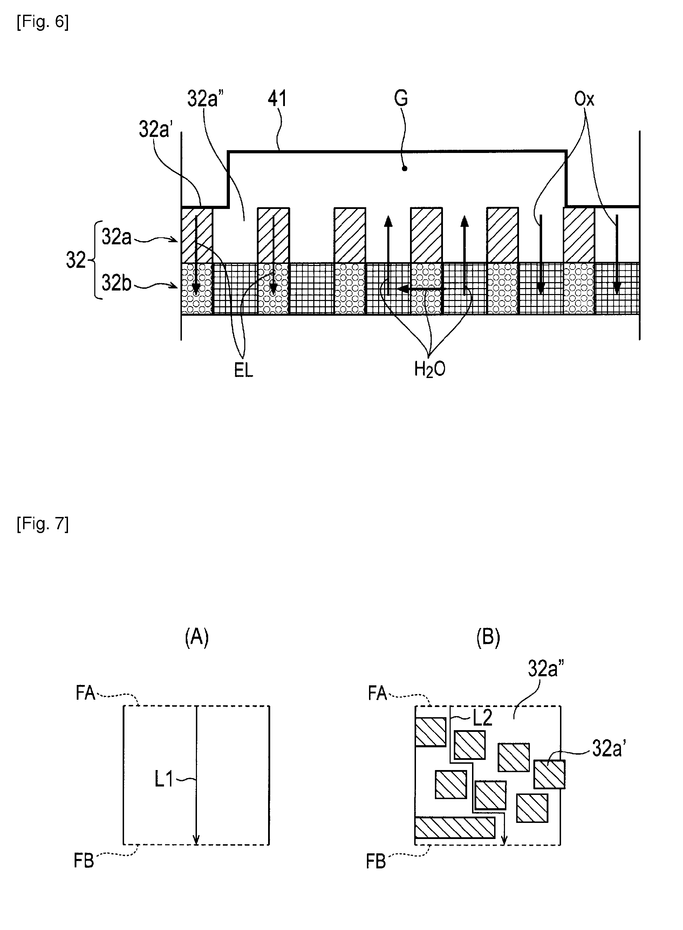

The structure of the air electrode 32 shown in Fig. 4 is described with reference to Fig. 6. Although only the air electrode 32 is described as an example, the fuel electrode 33 has a similar structure. In Fig. 6, "EL" denotes a flow of electrons, "H₂O" denotes a flow of liquid water produced upon power generation, and "Ox" denotes a flow of an oxygen-containing gas.

The membrane electrode assembly 30 generates power when the hydrogen-containing gas flowing through one of the gas flow channels G flows to and comes into contact with the fuel electrode 33 and also when the oxygen-containing gas flowing through the other one of the gas flow channels G flows to and comes into contact with the air electrode 32. The first porous body 32b (33b) has a low porosity at the portions in contact with the solid-phase portions 32a' (33a') of the second porous body 32a (33a), and has a relatively high porosity at the portions facing the gas-phase portions 32a" (33a") of the second porous body 32a (33a). For this reason, as shown with arrows EL in Fig. 6, transport paths for the electrons are secured between the first porous body 32b (33b) and the solid-phase portions 32a' (33a') of the second porous body 32a (33a). Thus, favorable transport of electrons can be achieved.

As for the gas-phase portions 32a" (33a") of the second porous body 32a (33a), as shown with arrows Ox in Fig. 6, transport paths for the oxygen-containing gas are secured between the gas flow channel G and the first porous body 32b (33b). Thus, favorable transport of the oxygen-containing gas can be achieved. Moreover, in the gas-phase portions 32a" (33a") of the second porous body 32a (33a), as shown with arrows H₂O in Fig. 6, liquid water produced upon power generation is easily discharged toward the gas flow channel G by capillary action, and the produced water is thereby prevented from spreading within the first porous body 32b (33b).

The above-described improvement in the transport of the electrons and of the oxygen-containing gas is related to a "degree of bend."

With reference to Figs. 7(A) and 7(B), a description is given of the degree of bend in the second porous body 32a. In a free space shown in Fig. 7(A), a shortest transport path L1 from position FA (plane FA) to position FB (plane FB) is a straight line. On the other hand, in the second porous body 32a shown in Fig. 7(B), a shortest transport path L2 is not a straight line but bendy because of the presence of the solid-phase portions 32a' in the second porous body 32a. Thus, the shortest transport path L2 is a bendy line which is longer than that in the free space.

The degree of bend in the second porous body 32a is represented by L2/L1. Thus, in the second porous body 32a, the smallest value of the degree of bend is "1." The same applies to the second porous body 33a.

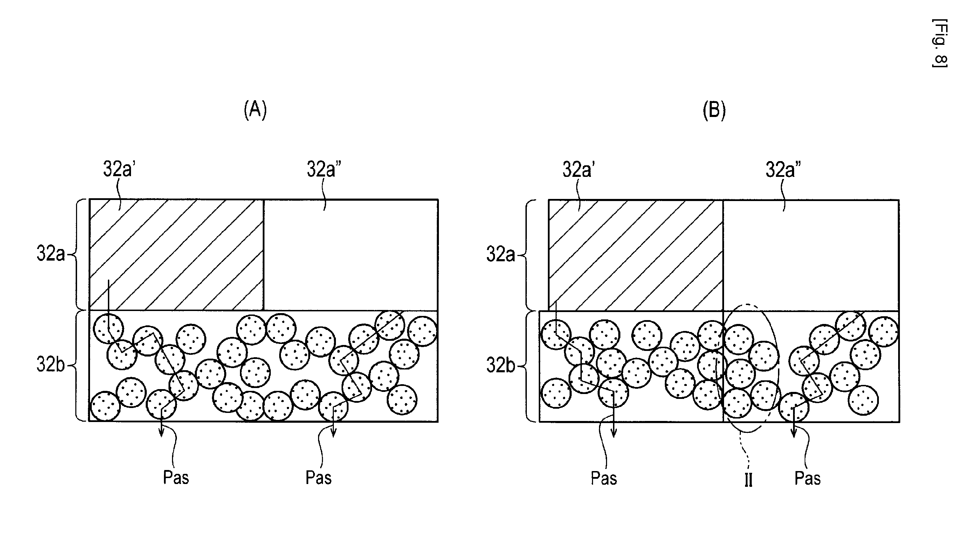

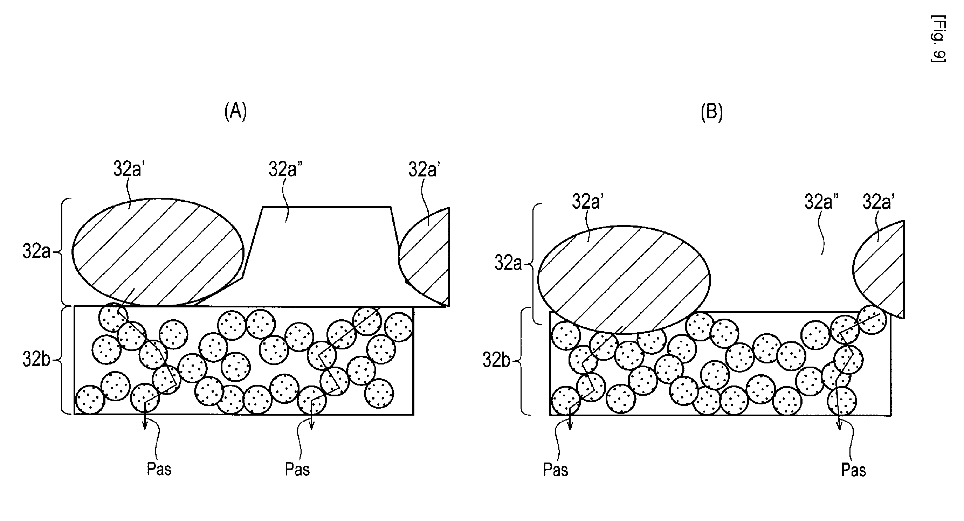

Next, a description is given of a method for manufacturing the membrane electrode assembly 30 according to the first embodiment. A first example of the method for manufacturing the membrane electrode assembly 30 is described with reference to Fig. 8, and a second example of the method for manufacturing the membrane electrode assembly 30 is described with reference to Fig. 9.

In the method for manufacturing the membrane electrode assembly 30 according to the first embodiment, the structure of the first porous body 32b (33b) is changed according to the arrangement of the gas-phase portions (voids) 32a" (33a") and the solid-phase portions 32a' (33a') of the second porous body 32a (33a). Specifically, in the method for manufacturing the membrane electrode assembly 30, voids in the first porous body 32b (33b) are crushed by part of the second porous body 32a (33a). Thereby, the first porous body 32b (33b) has a low porosity at the portions in contact with the solid-phase portions 32a' (33a') of the second porous body 32a (33a), and has a relatively high porosity at the portions facing the gas-phase portions 32a" (33a") of the second porous body 32a (33a).

As shown in Figs. 8(A) and 8(B), when a pressing force is applied by the second porous body 32a (33a) to the MPL (first porous body) 32b (33b), voids in the first porous body 32b (33b) at the portions in contact with the solid-phase portions 32a' (33a') are crushed. This is because carbon particles forming the first porous body 32b (33b) do not crush. The crushing of the gas-phase portions 32a" (33a") relatively decreases the porosity of the first porous body 32b (33b) and increases the occupancy of the solid (carbon particles) in the first porous body 32b (33b). As a result, an electron transport path Pas is shortened, which decreases the resistance against electron transport. If carbon particles originally not in contact with each other are brought into contact completely, the solid-phase portions 32a" (33a") are crushed no more unless they are fractured by compression. Thus, the pressing force can be easily controlled. Moreover, the second porous body 32a (33a) is not limited to the wire mesh, but can be a metal porous body. When the metal porous body is used, the manufacturing method can be facilitated.

The pressing force is not applied to the first porous body 32b (33b) at the portions facing the gas-phase portions (voids) 32a" (33a"). Hence, voids in the first porous body 32b (33b) at the portions facing the gas-phase portions (voids) 32a" (33a") are not crushed, and therefore little structural change occurs. However, carbon particles are often bound with a binder such as polytetrafluoroethylene (PTFE), and they follow the compressed carbon particles as shown with encircling line II in Fig. 8(B). As a result, the increase in the density of carbon particles under the solid-phase portions 32a' (33a') tends to increase the porosity under the gas-phase portions 32a" (33a"), too.

In the first example shown in Figs. 8(A) and 8(B), the wire mesh as the second porous body 32a (33a) has a quadrate sectional shape. In contrast, in the second example shown in Figs. 9(A) and 9(B), the wire mesh as the second porous body 32a (33a) has a round sectional shape (including a perfect circle and an ellipse). Also in this case, the structure of the first porous body 32b (33b) is changed according to the arrangement of the gas-phase portions (voids) 32a" (33a") and the solid-phase portions 32a' (33a') of the second porous body 32a (33a). Moreover, since the sectional shape of the wire mesh is round, there is a smooth area division between a lower portion of the solid-phase portion 32a' (33a') and a lower portion of the gas-phase portion 32a" (33a"). However, since the porosity of the first porous body 32b (33b) changes according to the solid-phase portions 32a' (33a'), the same effect as that of the first example can be offered.

According to the membrane electrode assembly 30 configured as above and the method for manufacturing the membrane electrode assembly 30, the following effects can be attained. Condensation of liquid water in the coarse region is prevented, and thereby decrease in the gas diffusivity can be prevented. Carbon particles are brought into more contact with each other under the solid-phase portions 32a' (33a'), so that the transport paths for electrons increase. On the other hand, particle contact is relatively low under the gas-phase portions 32a" (33a"), which allows securement of transport paths for oxygen. In addition, capillary pressure promotes discharge of liquid water from the solid-phase portions 32a' (33a') to the gas-phase portions 32a" (33a"). Thereby, transport of not only electrons but also oxygen can be improved, and consequently the power generation performance can be improved.

### Second Embodiment

In a second embodiment, the cell plate (fuel cell) A1 and the fuel cell stack 10 formed by stacking multiple cell plates A1 are described. In the cell plate A1, the first and second porous bodies 32a and 32b (33a and 33b) engage with each other such that the first porous body 32b (33b) is partly embedded in the gas-phase portions (voids) 32a" (33a") of the second porous body 32a (33a).

The overall configuration of the fuel cell stack 10 (Figs. 1 and 2), the configuration of the cell plate A1 (Figs. 3 and 4), and the configuration of the membrane electrode assembly 30 (Fig. 5) of the second embodiment are the same as those of the first embodiment, and therefore their illustrations and descriptions are omitted.

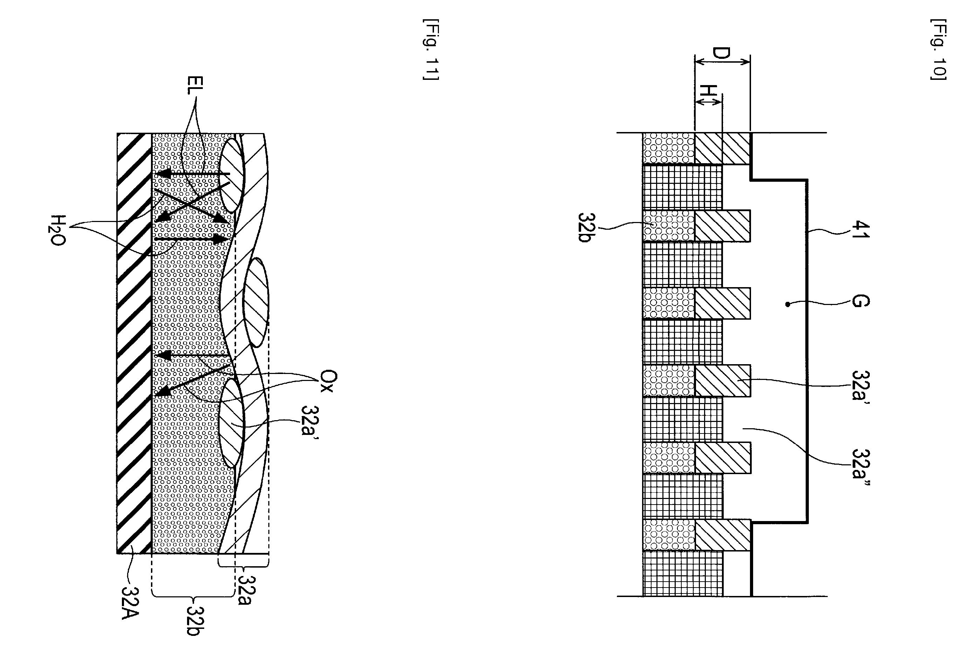

The structure of the air electrode 32 is described with reference to Fig. 10. Although only the air electrode 32 is described here as an example, the fuel electrode 33 has a similar structure. The air electrode 32 has the first porous body 32b and the second porous body 32a. The first and second porous bodies 32a and 32b engage with each other such that the first porous body 32b is partly embedded in the gas-phase portions (voids) 32a" of the second porous body 32a.

A height H by which the first porous body 32b and the second porous body 32a engage with each other is equal to or smaller than a depth D of the gas-phase portions 32a" of the second porous body 32a.

The first porous body 32b is a so-called porous solid, and is made for example of a carbon material. Specifically, the first porous body 32b is formed by binding randomly-stacked fiber with a binder and giving the stack a water-repellent treatment such as PTFE, or by sintering an aggregate of carbon black or the like with a binder such as PTFE.

The second porous body 32a is a metal porous body and is distinct from the first porous body 32b. At least one metal selected from the group consisting of iron, stainless steel, aluminum, aluminum alloys, chromium, chromium alloys, nickel, nickel alloys, magnesium, and magnesium alloys can be used for the second porous body 32a. A specific mode of the metal porous body includes wire mesh, punched metal, etched metal, expanded metal, and the like, and is wire mesh in this embodiment as shown in Fig. 5 or Fig. 11.

The fuel cell stack 10 is formed by stacking multiple cell plates (fuel cells) A1 according to the second embodiment. When an oxygen-containing gas and a hydrogen-containing gas are supplied to the air electrode 32 and the fuel electrode 33, respectively, the cell plate (fuel cell) A1 generates electric energy by electrochemical reaction. In this event, since the first porous body 32b (33b) is partly embedded in the gas-phase portions (voids) 32a" (33a") of the second porous body 32a (33a), transport paths for electrons are secured between the first porous body 32b (33b) and the solid-phase portions 32a' (33a') of the second porous body 32a, as shown with arrows EL in Fig. 11. Thereby, favorable transport of electrons can be achieved.

Under the gas-phase portions 32a" (33a") of the second porous body 32a (33a), as shown with arrows Ox in Fig. 11, transport paths for the oxygen are secured between the gas flow channel G and the first porous body 32b (33b), and thereby favorable transport of oxygen can be achieved. Moreover, under the gas-phase portions (voids) 32a" (33a") of the second porous body 32a (33a), as shown with arrows H₂O in Fig. 11, liquid water produced upon power generation is discharged toward the gas flow channel G easily by capillary action, and the produced water is prevented from spreading with the first porous body 32b (33b).

As described, with the cell plate (fuel cell) A1 and the fuel cell stack 10 according to the second embodiment, discharge of liquid water from the air electrode 32 and the fuel electrode 33 is facilitated, and at the same time, oxygen transport (gas diffusivity) is improved to consequently improve the power generation performance.

The second porous body 32a (33a) is at least one metal selected from the group consisting of iron, stainless steel, aluminum, aluminum alloys, chromium, chromium alloys, nickel, nickel alloys, magnesium, and magnesium alloys. Thereby, electron transportability can be improved while maintaining high oxygen transportability.

The height H by which the first porous body 32b (33b) and the second porous body 32a (33a) engage with each other is equal to or smaller than the depth D of the gas-phase portions 32a" (33a") of the second porous body 32a (33a). Thereby, the first porous body 32b (33b) does not partly protrudes toward the gas flow channel G. This enables the second porous body 32a (33a) having good conductivity to be in contact with the separator 40 (41) without fail, which allows securement of favorable conductive paths with low resistance.

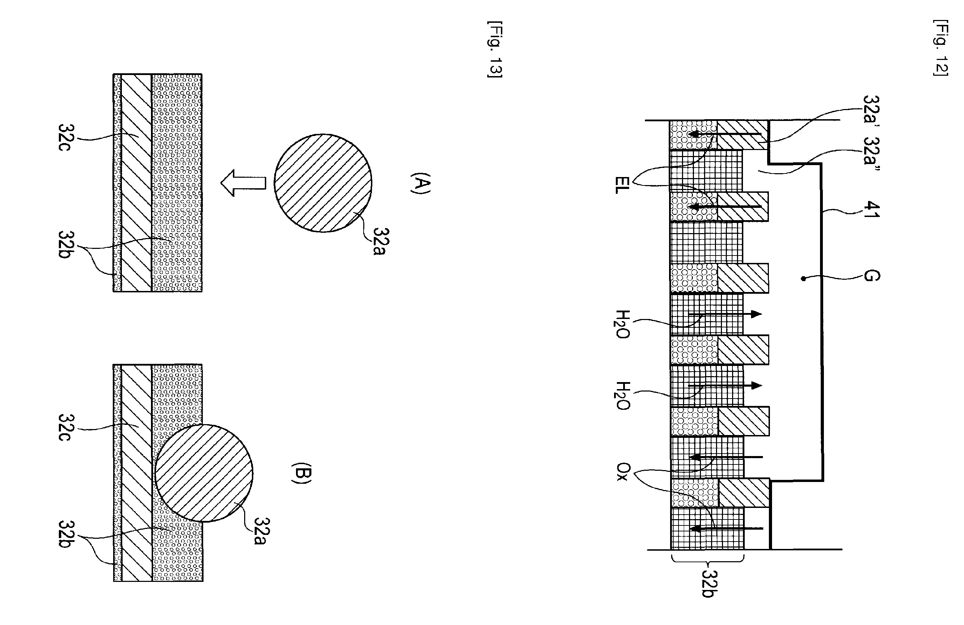

Other embodiments are described with reference to Figs. 12 and 13. Note that the same components as those in the prior embodiments are given the same reference numerals and are not described in detail.

Fig. 12 is an explanatory diagram schematically illustrating the structure of the air electrode 32 according to one embodiment. Although only the air electrode 32 is described here as an example, the fuel electrode 33 has a similar structure. In this embodiment, the first porous body 32b (33b) and the second porous body 32a (33a) are brought into pressure contact with each other to plastically deform the first porous body 32b (33b) in the stacking direction (the X direction) such that the first porous body 32b (33b) is partly embedded in the gas-phase portions 32a" (33a") of the second porous body 32a (33a). Thereby, the first porous body 32b (33b) and the second porous body 32a (33a) engage with each other.

Under the solid-phase portions 32a' (33a') of the second porous body 32a (33a), the first porous body 32b (33b) is compressed to increase contact among carbon particles forming the first porous body 32b (33b). Thus, more electron transport paths (arrows EL in Fig. 12) are secured to make the electron transport more favorable.

At the gas-phase portions 32a" (33a") of the second porous body 32a (33a), the oxygen transport paths (arrows Ox in Fig. 12) are secured between the gas flow channel G and the first porous body 32b (33b) to make the oxygen transport favorable. Further, under the gas-phase portions (voids) 32a" (33a"), as shown with arrows H₂O in Fig. 12, liquid water produced upon power generation is discharged easily toward the gas flow channel G by capillary action, and the produced water is prevented from spreading within the first porous body 32b (33b).

Fig. 13 is an explanatory diagram schematically illustrating the structure of the air electrode 32 according to one embodiment. Although only the air electrode 32 is described here as an example, the fuel electrode 33 has a similar structure. In this embodiment, the first porous body 32b (33b) has a reinforcement layer 32c (33c) as an interlayer thereof. The reinforcement layer 32c (33c) is formed of reinforcement fiber such as, for example, carbon fiber. The second porous body 32a (33a) is wire mesh being a metal porous body, and has a round sectional shape as shown in Fig. 13.

Like the embodiment shown in Fig. 12, the first porous body 32b (33b) and the second porous body 32a (33a) are brought into pressure contact with each other to plastically deform the first porous body 32b (33b) in the stacking direction (the X direction) such that the first porous body 32b (33b) is partly embedded in the voids of the second porous body 32a (33a). Thereby, the first porous body 32b (33b) and the second porous body 32a (33a) engage with each other.

In the embodiment shown in Fig. 13, upon the plastic deformation of the first porous body 32b (33b), the reinforcement layer 32c (33c) allows the first porous body 32b (33b) not to be fractured but to be partly embedded in the voids of the second porous body 32a (33a).

Although the embodiments of the present invention have been described, the invention is not limited to the foregoing embodiments, and various modifications may be made within the scope of the invention.

For example, although the wire mesh is used as an example for the second porous body in the embodiments described above, the present invention is not limited this. For example, punched metal or the like can of course be used instead.

### Industrial Applicability

According to the embodiments of the present invention, discharge of liquid water produced upon power generation is facilitated, and at the same time, oxygen transport (gas diffusivity) is improved to consequently improve the power generation performance. Therefore, the present invention is industrially applicable.

### Reference Signs List

10 fuel cell stack
30 membrane electrode assembly
32A, 33A catalyst layer
32a, 33a second porous body
32b, 33b first porous body
32c, 33c reinforcement layer
32a', 33a' solid-phase portion
32a", 33a" gas-phase portion
40, 41 separator

## Claims

1. A membrane electrode assembly (30) in which a first porous body (32b, 33b) is stacked on a surface of a catalyst layer (32A, 33A) and a second porous body (32a, 33a) is stacked on the first porous body (32b, 33b), wherein
the first porous body (32b, 33b) and the second porous body (32a, 33a) define a gas diffusion layer (32B),
the first porous body (32b, 33b) has a lower porosity at portions in contact with solid-phase portions (32a', 33a') of the second porous body (32a, 33a) than at portions facing gas-phase portions (32a", 33a") of the second porous body (32a, 33a), and
the second porous body (32a, 33a) is a metal porous body and is distinct from the first porous body (32b, 33b).

2. The membrane electrode assembly (30) according to claim 1, wherein
the first porous body (32b, 33b) has a larger particle size at the portions in contact with the solid-phase portions (32a', 33a') of the second porous body (32a, 33a) than at the portions facing the gas-phase portions (32a", 33a") of the second porous body (32a, 33a).

3. The membrane electrode assembly (30) according to any one of claims 1 and 2, wherein
the second porous body (32a, 33a) is made of at least one metal selected from the group consisting of iron, stainless steel, aluminum, aluminum alloys, chromium, chromium alloys, nickel, nickel alloys, magnesium, and magnesium alloys.

4. A fuel cell (A1) comprising:
the membrane electrode assembly (30) according to any one of claims 1 to 3; and
a separator (40, 41) configured to form a gas flow channel between the separator (40, 41) and the membrane electrode assembly (30).

5. A method for manufacturing the membrane electrode assembly (30) according to any one of claims 1 to 3, comprising
pressing and crushing voids in the first porous body (32b, 33b) with the second porous body (32a, 33a) to decrease the porosity of the first porous body (32b, 33b) at the portions in contact with the solid-phase portions (32a', 33a') and to relatively increase the porosity of the first porous body (32b, 33b) at the portions facing the gas-phase portions (32a", 33a").

6. A fuel cell (A1) comprising:
the membrane electrode assembly (30) according to claims 1; and
a separator (40, 41) configured to form a gas flow channel between the separator (40, 41) and the membrane electrode assembly (30), wherein
the first porous body (32b, 33b) and the second porous body (32a, 33a) engage with each other such that the first porous body (32b, 33b) is partly embedded in voids in the second porous body (32a, 33a).

7. The fuel cell (A1) according to claim 6, wherein
the first porous body (32b, 33b) and the second porous body (32a, 33a) are brought into pressure contact with each other to plastically deform the first porous body (32b, 33b) in a stacking direction such that the first porous body (32b, 33b) is partly embedded in the voids in the second porous body (32a, 33a).

8. The fuel cell (A1) according to claim 7, wherein
the first porous body (32b, 33b) has a reinforcement layer as an interlayer thereof.

9. The fuel cell (A1) according to any one of claims 6 to 8, wherein
the second porous body (32a, 33a) is made of at least one metal selected from the group consisting of iron, stainless steel, aluminum, aluminum alloys, chromium, chromium alloys, nickel, nickel alloys, magnesium, and magnesium alloys.

10. The fuel cell (A1) according to any one of claims 6 to 9, wherein
a height by which the first porous body (32b, 33b) and the second porous body (32a, 33a) engage with each other is equal to or smaller than a depth of the voids in the second porous body (32a, 33a).

11. A fuel cell stack (10) formed by stacking a plurality of the fuel cells (A1) according to any one of claims 6 to 10.

12. The membrane electrode assembly (30) according to claim 1, wherein
the second porous body (32a, 33a) has solid-phase portions (32a', 33a') where a metal wire material exists and gas-phase portions (32a", 33a") where no metal wire material exists.

13. The membrane electrode assembly (30) according to claim 12, wherein
a wire mesh as the second porous body (32a, 33a) has a quadrate sectional shape, or a round sectional shape.

## Patentansprüche

1. Membranelektrodenanordnung (30), bei der ein erster poröser Körper (32b, 33b) auf eine Oberfläche einer Katalysatorschicht (32A, 33A) gestapelt ist, und ein zweiter poröser Körper (32a, 33a) auf den ersten porösen Körper (32b, 33b) gestapelt ist, wobei
der erste poröse Körper (32b, 33b) und der zweite poröse Körper (32a, 33a) eine Gasdiffusionsschicht (32B) definieren,
der erste poröse Körper (32b, 33b) eine geringere Porosität an Bereichen in Kontakt mit Festphasenbereichen (32 a', 33a') des zweiten porösen Körpers (32 a, 33a) als an Bereichen aufweist, die Gasphasenbereichen (32a", 33a") des zweiten porösen Körpers (32a, 33a) zugewandt sind, und
der zweite poröse Körper (32a, 33a) ein poröser Metallkörper ist und sich vom ersten porösen Körper (32b, 33b) unterscheidet.

2. Membranelektrodenanordnung (30) nach Anspruch 1, wobei
der erste poröse Körper (32b, 33b) eine größere Partikelgröße an den Bereichen in Kontakt mit den Festphasenbereichen (32a', 33a') des zweiten porösen Körpers (32a, 33a) als an den Bereichen aufweist, die den Gasphasenbereichen (32a", 33a") des zweiten porösen Körpers (32a, 33a) zugewandt sind.

3. Membranelektrodenanordnung (30) nach einem der Ansprüche 1 oder 2, wobei
der zweite poröse Körper (32a, 33a) zumindest aus einem Metall hergestellt ist, das aus der Gruppe bestehend aus Eisen, Edelstahl, Aluminium, Aluminiumlegierungen, Chrom, Chromlegierungen, Nickel, Nickellegierungen, Magnesium und Magnesiumlegierungen ausgewählt ist.

4. Brennstoffzelle (A1 ), umfassend:
die Membranelektrodenanordnung (30) nach einem der Ansprüche 1 bis 3; und
einen Separator (40, 41), der zum Bilden eines Gasströmungskanals zwischen dem Separator (40, 41) und der Membranelektrodenanordnung (30) konfiguriert ist.

5. Verfahren zum Herstellen der Membranelektrodenanordnung (30) nach einem der Ansprüche 1 bis 3, umfassend
Pressen und Quetschen von Hohlräumen im ersten porösen Körper (32b, 33b) mit dem zweiten porösen Körper (32a, 33a), um die Porosität des ersten porösen Körpers (32b, 33b) an Bereichen in Kontakt mit den Festphasenbereichen (32a', 33a') zu verringern und die Porosität des ersten porösen Körpers (32b, 33b) an den Bereichen relativ zu vergrößern, die den Gasphasenbereichen (32a", 33a") zugewandt sind.

6. Brennstoffzelle (A1), umfassend:
die Membranelektrodenanordnung (30) nach Anspruch 1; und
einen Separator (40, 41), der zum Bilden eines Gasströmungskanals zwischen dem Separator (40, 41) und der Membranelektrodenanordnung (30) konfiguriert ist, wobei
der erste poröse Körper (32b, 33b) und der zweite poröse Körper (32a, 33a) so miteinander im Eingriff stehen, dass der erste poröse Körper (32b 33b) teilweise in Hohlräumen des zweiten porösen Körpers (32a, 33a) eingebettet ist.

7. Brennstoffzelle (A1) nach Anspruch 6, wobei
der erste poröse Körper (32b, 33b) und der zweite poröse Körper (32a, 33a) in einen Druckkontakt miteinander gebracht werden, um den ersten porösen Körper (32b, 33b) in Stapelrichtung elastisch so zu verformen, dass der erste poröse Körper (32b, 33b) teilweise in den Hohlräumen des zweiten porösen Körpers (32a, 33a) eingebettet ist.

8. Brennstoffzelle (A1) nach Anspruch 7, wobei
der erste poröse Körper (32b, 33b) eine Verstärkungsschicht als Zwischenschicht davon aufweist.

9. Brennstoffzelle (A1) nach einem der Ansprüche 6 bis 8, wobei
der zweite poröse Körper (32a, 33a) zumindest aus einem Metall hergestellt ist, das aus der Gruppe bestehend aus Eisen, Edelstahl, Aluminium, Aluminiumlegierungen, Chrom, Chromlegierungen, Nickel, Nickellegierungen, Magnesium und Magnesiumlegierungen ausgewählt ist.

10. Brennstoffzelle (A1) nach einem der Ansprüche 6 bis 9, wobei
eine Höhe, mit welcher der erste poröse Körper (32b, 33b) und der zweite poröse Körper (32a, 33a) miteinander im Eingriff stehen, gleichgroß oder geringer als eine Tiefe der Hohlräume zweiten porösen Körper (32a, 33a) ist.

11. Brennstoffzellenstapel (10), der durch Stapeln einer Vielzahl der Brennstoffzellen (A1) nach einem der Ansprüche 6 bis 10 gebildet ist.

12. Membranelektrodenanordnung (30) nach Anspruch 1, wobei
Der zweite poröse Körper (32a, 33a) Festphasenbereiche (32a', 33a'), wo ein Metalldrahtmaterial vorhanden ist, und Gasphasenbereiche (32a", 33a") aufweist, wo kein Metalldrahtmaterial vorhanden ist.

13. Membranelektrodenanordnung (30) nach Anspruch 12, wobei
ein Drahtgewebe als zweiter poröser Körper (32a, 33a) eine quadratische Querschnittsform oder eine runde Querschnittsform aufweist.

## Revendications

1. Ensemble membrane-électrodes (30) dans lequel un premier corps poreux (32b, 33b) est empilé sur une surface d'une couche de catalyseur (32A, 33A) et un deuxième corps poreux (32a, 33a) est empilé sur le premier corps poreux (32b, 33b), où
le premier corps poreux (32b, 33b) et le deuxième corps poreux (32a, 33a) définissent une couche de diffusion de gaz (32B),
le premier corps poreux (32b, 33b) a une porosité au niveau des parties en contact avec des parties en phase solide (32a', 33a') du deuxième corps poreux (32a, 33a) inférieure à celle au niveau des parties faisant face à des parties en phase gazeuse (32a", 33a") du deuxième corps poreux (32a, 33a), et
le deuxième corps poreux (32a, 33a) est un corps poreux métallique et est distinct du premier corps poreux (32b, 33b).

2. Ensemble membrane-électrodes (30) selon la revendication 1, dans lequel
le premier corps poreux (32b, 33b) a une taille de particules au niveau des parties en contact avec les parties en phase solide (32a', 33a') du deuxième corps poreux (32a, 33a) supérieure à celle au niveau des parties faisant face aux parties en phase gazeuse (32a", 33a") du deuxième corps poreux (32a, 33a).

3. Ensemble membrane-électrodes (30) selon l'une quelconque des revendications 1 et 2, dans lequel
le deuxième corps poreux (32a, 33a) est réalisé en au moins un métal choisi dans le groupe constitué de fer, d'acier inoxydable, d'aluminium, d'alliages d'aluminium, de chrome, d'alliages de chrome, de nickel, d'alliages de nickel, de magnésium et d'alliages de magnésium.

4. Pile à combustible (A1) comprenant :
l'ensemble membrane-électrodes (30) selon l'une quelconque des revendications 1 à 3 ; et
un séparateur (40, 41) configuré pour former un canal d'écoulement de gaz entre le séparateur (40, 41) et l'ensemble membrane-électrodes (30).

5. Procédé de fabrication de l'ensemble membrane-électrodes (30) selon l'une quelconque des revendications 1 à 3, comprenant le fait
de presser et d'écraser des vides dans le premier corps poreux (32b, 33b) avec le deuxième corps poreux (32a, 33a) pour diminuer la porosité du premier corps poreux (32b, 33b) au niveau des parties en contact avec les parties en phase solide (32a', 33a') et pour augmenter relativement la porosité du premier corps poreux (32b, 33b) au niveau des parties faisant face aux parties en phase gazeuse (32a", 33a").

6. Pile à combustible (A1) comprenant :
l'ensemble membrane-électrodes (30) selon la revendication 1 ; et
un séparateur (40, 41) configuré pour former un canal d'écoulement de gaz entre le séparateur (40, 41) et l'ensemble membrane-électrodes (30), où
le premier corps poreux (32b, 33b) et le deuxième corps poreux (32a, 33a) s'engagent l'un avec l'autre de sorte que le premier corps poreux (32b, 33b) soit incorporé en partie dans des vides dans le deuxième corps poreux (32a, 33a).

7. Pile à combustible (A1) selon la revendication 6, dans laquelle
le premier corps poreux (32b, 33b) et le deuxième corps poreux (32a, 33a) sont amenés en contact par pression l'un avec l'autre pour déformer plastiquement le premier corps poreux (32b, 33b) dans une direction d'empilement de sorte que le premier corps poreux (32b, 33b) soit incorporé en partie dans les vides dans le deuxième corps poreux (32a, 33a).

8. Pile à combustible (A1) selon la revendication 7, dans laquelle
le premier corps poreux (32b, 33b) a une couche de renfort en tant que couche intermédiaire de celui-ci.

9. Pile à combustible (A1) selon l'une quelconque des revendications 6 à 8, dans laquelle
le deuxième corps poreux (32a, 33a) est réalisé en au moins un métal choisi dans le groupe constitué de fer, d'acier inoxydable, d'aluminium, d'alliages d'aluminium, de chrome, d'alliages de chrome, de nickel, d'alliages de nickel, de magnésium et d'alliages de magnésium.

10. Pile à combustible (A1) selon l'une quelconque des revendications 6 à 9, dans laquelle
une hauteur grâce à laquelle le premier corps poreux (32b, 33b) et le deuxième corps poreux (32a, 33a) s'engagent l'un avec l'autre est inférieure ou égale à une profondeur des vides dans le deuxième corps poreux (32a, 33a).

11. Empilement de piles à combustible (10) formé en empilant une pluralité des piles à combustible (A1) selon l'une quelconque des revendications 6 à 10.

12. Ensemble membrane-électrodes (30) selon la revendication 1, dans lequel
le deuxième corps poreux (32a, 33a) a des parties en phase solide (32a', 33a') où un matériau de fil métallique existe et des parties en phase gazeuse (32a", 33a") où aucun matériau de fil métallique n'existe.

13. Ensemble membrane-électrodes (30) selon la revendication 12, dans lequel
un treillis métallique comme étant le deuxième corps poreux (32a, 33a) a une forme de section carrée, ou une forme de section ronde.
